# FASCICULE DE BREVET EUROPEEN

(11) **EP 3 270 088 B1**
(45) Date de publication et mention de la délivrance du brevet: **11.09.2019**
(21) Numéro de dépôt: 17180719.1
(22) Date de dépôt: 11.07.2017
(51) Int. Cl.: F28F 21/04, F02C 6/16, F28D 17/00, F28D 20/00

(54) **CONTENEUR D'UN SYSTEME DE STOCKAGE ET DE RESTITUTION DE LA CHALEUR COMPORTANT AU MOINS DEUX MODULES EN BETON**
BEHÄLTER EINES WÄRMESPEICHER- UND -ABGABESYSTEMS, DER MINDESTENS ZWEI BETONMODULE UMFASST
CONTAINER OF A SYSTEM FOR STORING AND RESTORING HEAT HAVING AT LEAST TWO CONCRETE MODULES

(30) Priorité: 15.07.2016 FR 1656803
(43) Date de publication de la demande: 17.01.2018
(73) Titulaire: IFP Energies nouvelles, 92500 Rueil-Malmaison (FR)
(72) Inventeur: DELEAU, Fabrice, 69310 Pierre-Benite (FR); BANCEL, Thierry, 43330 Pont Salomon (FR); POURTIER, Alice, 78440 Fontenay St Pere (FR)
(74) Mandataire: IFP Energies nouvelles

(56) Documents cités:
- WO-A1-2015/150104
- FR-A1- 2 998 556
- US-A- 4 405 010

## Description

### Domaine de l'invention

La présente invention concerne le domaine du stockage de chaleur, en particulier les conteneurs pour le stockage de chaleur de grand volume, tels qu'utilisés pour le stockage d'énergie par air comprimé (CAES de l'anglais « Compressed Air Energy Storage »), en particulier pour le stockage d'énergie par air comprimé de type AACAES (de l'anglais « Advanced Adiabatic Compressed Air Energy Storage ») dans lequel est prévu le stockage de l'air et le stockage de la chaleur générée de manière indépendante.

### Contexte général

La majorité des sources d'énergies primaires, telles que le gaz, le pétrole, le charbon, peut être stockée facilement, et ainsi permettre une production d'électricité à la demande, contrairement à la production d'électricité à partir de sources d'énergies renouvelables telles que l'énergie éolienne ou solaire. Pour fournir de l'électricité à la demande, produite par ce type d'énergies renouvelables, il est nécessaire de stocker l'électricité. Or, il est très difficile de stocker l'électricité en grande quantité. Il est néanmoins possible de convertir l'électricité en énergies dites intermédiaires, et de la stocker sous la forme d'énergie potentielle, cinétique, chimique ou thermique.

L'électricité peut par exemple être stockée sous forme d'air comprimé. C'est ce qui est réalisé dans les systèmes CAES dans lesquels une énergie, typiquement l'électricité, que l'on souhaite utiliser à un autre moment, est stockée sous forme d'air comprimé. Pour le stockage, l'énergie électrique entraîne des compresseurs d'air, et pour le déstockage, l'air comprimé entraîne des turbines qui sont reliées à une génératrice électrique. L'air comprimé est typiquement stocké dans une cavité du sous-sol, une formation rocheuse poreuse, un réservoir de gisement pétrolier ou gazier épuisé, ou tout autre réservoir d'air comprimé, qui peut être une cuve sous pression. Le rendement de cette solution n'est pas optimal car une partie de l'énergie de l'air comprimé se retrouve sous forme de chaleur qui n'est pas utilisée : la chaleur produite lors de la compression de l'air est rejetée. D'autre part, l'air stocké est chauffé pour réaliser la détente de l'air, ce qui pénalise là encore le rendement énergétique du système.

Plusieurs variantes existent actuellement à ce système CAES. On peut citer notamment les systèmes et procédés :
- ACAES (de l'anglais « Adiabatic Compressed Air Energy Storage ») dans lequel l'air est stocké à haute température due à la compression. Toutefois, ce type de système nécessite un système de stockage spécifique, volumineux et coûteux (stockage adiabatique).
- AACAES (de l'anglais « Advanced Adiabatic Compressed Air Energy Storage ») dans lequel l'air est stocké à température ambiante, et la chaleur due à la compression est également stockée, séparément, dans un système de stockage de la chaleur TES (de l'anglais « Thermal Energy Storage »). La chaleur stockée dans le système TES est utilisée pour chauffer l'air avant sa détente.

Selon certaines conceptions envisagées du AACAES, la chaleur est stockée en utilisant un fluide caloporteur permettant de stocker la chaleur issue de la compression de l'air et de la restituer à l'air avant sa détente au moyen d'échangeurs de chaleur. Par exemple, la demande de brevet EP 2447501 décrit un système AACAES dans lequel de l'huile, utilisée en tant que fluide caloporteur, circule en circuit fermé pour échanger de la chaleur avec l'air.

Selon d'autres conceptions envisagées du AACAES, la chaleur est stockée au moyen de solides statiques contenus dans un ou plusieurs conteneurs. Par exemple, la chaleur est stockée dans un matériau sous forme de particules en lit fixe disposé dans un ou plusieurs conteneurs, et traversé par l'air à refroidir. Cette chaleur est restituée à l'air froid qui traverse le lit fixe en sens opposé lors d'une phase de décharge (décompression de l'air).

La présente invention porte sur un conteneur de ce dernier type, apte à recevoir un matériau de stockage de la chaleur sous forme de particules en lit fixe.

Le conteneur est avantageusement utilisé pour le stockage d'énergie sous forme d'air comprimé de type AACAES, mais n'est pas limité à cette application. Ainsi, le conteneur peut convenir à toute application mettant en oeuvre un système de stockage et de restitution de la chaleur requérant une capacité de stockage importante de la chaleur, et pouvant nécessiter une résistance à des températures et pressions importantes. A titre d'exemple on peut citer d'autres domaines d'application que celui du stockage d'énergie sous forme d'air comprimé, tel que le domaine de la métallurgie, par exemple dans le cadre de la récupération et de la restitution de la chaleur des fumées de hauts fourneaux, le domaine du stockage de l'énergie marine, etc.

Une difficulté majeure consiste à concevoir des conteneurs de systèmes de stockage de la chaleur qui puissent être opérés à de fortes pressions, de l'ordre de plusieurs dizaines de bars, typiquement des pressions allant jusqu'à 65-85 bar, et qui puissent fonctionner à de hautes températures, typiquement de plusieurs centaines de degrés C, pouvant aller jusqu'à 750°C.

Pour résister aux hautes températures ainsi qu'aux fortes pressions, les TES comprennent généralement de grandes cuves cylindriques en béton remplies d'un matériau de stockage de la chaleur, qui comportent des parois épaisses en béton précontraint pouvant être renforcées par de l'acier, et qui peuvent présenter diverses structures de renforcement des parois, par exemples de type entretoises, pour résister aux contraintes exercées sur les parois dues à la pression interne.

On connait par exemple un TES dans le cadre du stockage d'air comprimé adiabatique pouvant fonctionner à très haute température, par exemple jusqu'à 650°C, et à des pressions jusqu'à 65 bars, tel que décrit dans le brevet EP1857614B. Ce système de stockage comporte une double structure formée par deux capsules emboitées l'une dans l'autre, avec une capsule de pression extérieure en béton précontraint, et une capsule interne en béton résistante à la chaleur et renfermant le matériau de stockage de la chaleur, par exemple des éléments en céramique empilés. Ce système repose sur une contribution mécanique de la paroi béton pour contenir la pression interne. Ceci impose une réalisation sur site avec la fabrication de béton précontraint, sans réalisation possible en atelier. En outre, de tels systèmes, impliquant la construction de parois cylindriques en béton de fortes épaisseurs (plus de 1 m par exemple) posent des difficultés d'ingénierie, et sont couteuses et complexes à réaliser. Enfin, ce système ne permet pas de répondre aux contraintes de pression visées aujourd'hui dans les systèmes TES, qui sont plutôt de l'ordre de 125 bars, voire 300 bars.

On connait également un système de stockage de la chaleur pouvant stocker de la chaleur à des pressions supérieures à 3-4 bars, pouvant être utilisé dans des systèmes de stockage d'air comprimé quasi-adiabatiques, tel que décrit dans le brevet FR2998556A1. Un tel conteneur présente des parois en béton réfractaire entourées d'une coque en acier, un isolant thermique étant prévu entre la coque en acier et les parois en béton. La structure en sandwich formée par l'ensemble parois en béton réfractaire/isolant/coque en acier permet de réduire les pertes thermiques en isolant le matériau de stockage thermique, permet de réduire la température de la paroi en acier limitant ainsi la dégradation des caractéristiques de cette dernière, permet de limiter la température de peau de la coque acier améliorant la sécurité, et permet de contenir la pression régnant dans le conteneur fonction de l'épaisseur de la coque acier. Le conteneur selon FR2998556A1 comporte également des grilles de maintien du matériau de stockage de la chaleur pouvant être disposées à différentes hauteurs dans le conteneur, qui jouent également un rôle d'entretoises limitant la contrainte s'exerçant sur les parois. Cette configuration permet de maintenir le matériau de stockage à différentes hauteurs dans le conteneur, participant ainsi à limiter la contrainte s'exerçant sur les parois, et permet également une meilleure répartition du matériau dans la cuve ce qui améliore l'interaction de l'air avec le matériau de stockage.

Lors des opérations de charge et de décharge de l'air, la structure subit des dilatations thermiques, notamment au niveau des grilles. Afin d'absorber ces dilatations, le système de stockage de la chaleur selon FR2998556A1 prévoit que les grilles soient fixées aux parois en béton par des anneaux associés à des chaines, évitant la génération de contraintes mécaniques lors des dilatation thermiques.

Cependant, en raison des efforts importants mis en jeu par le stockage du matériau, il est difficile de mettre en oeuvre un tel conteneur comportant des grilles fixées par un système d'anneaux et de chaînes mal adapté à la quantité et au poids du matériau utilisé, notamment dans des applications de type AACAES dans lesquelles plusieurs centaines de tonnes de matériau sous formes de particules sont stockées dans des réservoirs d'une capacité comprise entre environ 200 m³ et 1000 m³. En outre un tel système de fixation est encombrant. Le document FR2998556A1 décrit un conteneur d'un système de stockage et de restitution de chaleur selon le préambule de la revendication 1.

### Objectifs et résumé de l'invention

La présente invention propose une nouvelle réalisation de systèmes de stockage de chaleur adaptés à des conditions de pression élevées, pouvant typiquement fonctionner jusqu'à des pressions de l'ordre de 300 bars, et adaptés à des conditions de température modérées, typiquement des températures maximum de l'ordre de 300°C.

En particulier, la présente invention vise à fournir un conteneur d'un système de stockage et de restitution de la chaleur, destiné à contenir un matériau de stockage de la chaleur sous forme de particules en lit fixe, apte à être opéré à haute pression, de préférence à des pressions supérieures à 100 bars et allant jusqu'à 300 bars, tout en visant à limiter les problèmes liés à la dilation thermique lors des opérations de stockage et de restitution de la chaleur, à diminuer les coûts de fabrication du conteneur, et à faciliter le montage du conteneur.

Ainsi, pour atteindre au moins l'un des objectifs susvisés, parmi d'autres, et pour surmonter au moins en partie les inconvénients de l'art antérieur exposés plus haut, la présente invention propose, selon un premier aspect, un conteneur d'un système de stockage et de restitution de la chaleur, comprenant une enceinte comportant des moyens d'injection et de soutirage d'un gaz à refroidir ou à réchauffer. L'enceinte est délimitée par une première enveloppe en béton entourée par une couche isolante thermiquement, la couche isolante étant entourée d'une coque en acier, la première enveloppe en béton et la couche isolante étant non étanches à la pression. L'enceinte comporte au moins deux modules en béton disposés l'un au-dessus de l'autre de manière centrée pour former la première enveloppe en béton. Chaque module en béton comprend un volume délimité par une paroi latérale en béton et un fond perforé en béton, le volume étant apte à contenir un lit fixe de particules d'un matériau de stockage et de restitution de chaleur.

Selon un mode de réalisation, les modules en béton sont monoblocs.

Selon un mode de réalisation, le matériau de stockage et de restitution de la chaleur est sous forme de particules en béton.

Selon un mode de réalisation, le conteneur est en forme de colonne, comportant des modules en béton de forme cylindrique.

De préférence, le conteneur comporte des trous d'équipression dans l'enveloppe en béton.

Avantageusement, la conductivité thermique est comprise entre :
- 0,1 et 2 W.m⁻¹.K⁻¹ pour l'enveloppe en béton,
- 0,01 et 0,17 W.m⁻¹.K⁻¹ pour la couche isolante, et
- 20 et 250 W.m⁻¹.K⁻¹ pour la coque en acier.

Avantageusement, l'épaisseur de la couche isolante est telle que, en utilisation de stockage de chaleur, la température de la coque en acier est inférieure ou égale à 50°C, et la couche isolante est de préférence choisie parmi une couche de laine de roche, de perlite, de la laine de verre, de verre cellulaire, une lame d'air, et plus préférentiellement est une couche de laine de roche.

Selon un mode de réalisation, le conteneur comporte entre 2 et 12 modules en béton.

Selon un mode de réalisation, l'enceinte a un volume compris entre 200 m³ et 1000 m³.

Selon un mode de réalisation, le conteneur comporte plusieurs enceintes montées en série et/ou en parallèle.

Selon un deuxième aspect, l'invention porte sur un système de stockage et de restitution de la chaleur comportant au moins un conteneur selon l'invention.

Selon un troisième aspect, l'invention porte sur une installation de stockage d'énergie par air comprimé de type AACAES comportant :
- un système de compression pour comprimer de l'air lors d'une phase de compression ;
- un système de stockage et de restitution de la chaleur selon l'invention pour stocker la chaleur de l'air comprimé lors de la phase de compression et pour restituer la chaleur à l'air comprimé lors d'une phase de détente ;
- un réservoir final de stockage de l'air comprimé par le système de compression et refroidi par le système de stockage et de restitution de la chaleur ;
- un dispositif de détente de l'air comprimé issu du réservoir de stockage final lors de la phase de détente.

Selon un mode de réalisation, le réservoir final a un volume compris entre 1000 m³ et 7000 m³ et l'enceinte dudit au moins un conteneur du système de stockage et de restitution de la chaleur a un volume compris entre 200 m³ et 1000 m³, le système de stockage et de restitution de la chaleur comprenant de préférence au moins trois conteneurs.

Selon un quatrième aspect, l'invention porte sur un procédé de montage d'un conteneur selon l'invention, comportant :
- l'installation de la coque en acier dépourvue d'un chapeau de couverture sur le site de montage du conteneur, la coque en acier étant disposée sur un support ;
- le montage des modules en béton, l'installation de la couche isolante et le remplissage desdits modules par le matériau de stockage de la chaleur, par insertion successive desdits modules dans la coque en acier de manière centrée pour former la première enveloppe en béton ;
- la fermeture du conteneur par assemblage de la coque en acier avec un couvercle en acier préalablement isolé thermiquement, de préférence par soudage.

Selon un mode de réalisation, on remplit le volume du module en béton par le matériau de stockage de la chaleur de manière à créer un lit fixe de particules une fois le module inséré dans la coque en acier.

Alternativement, on peut remplir le volume du module en béton par le matériau de stockage de la chaleur de manière à créer un lit fixe de particules avant l'insertion du module dans la coque en acier.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Brève description des figures

La figure 1 est un schéma illustrant le principe d'un procédé AACAES dans lequel est mis en oeuvre un système de stockage et de restitution de la chaleur (TES) selon l'invention.
La figure 2 est un schéma d'un conteneur de TES selon un mode de réalisation de l'invention.
La figure 3 est un schéma d'un module en béton du conteneur de TES illustré à la figure 2.
La figure 4 est un schéma d'un module en béton d'un conteneur de TES selon un autre mode de réalisation.
La figure 5 est un schéma illustrant un exemple d'assemblage du conteneur de TES représenté à la figure 2.
La figure 6 est un graphique illustrant l'évolution de la température à travers la paroi multicouches de conteneur de TES illustré à la figure 2.
La figure 7 est une vue 3D d'un premier exemple de coque acier d'un conteneur de TES selon l'invention.
La figure 8 est une vue 3D d'un deuxième exemple de coque acier d'un conteneur de TES selon l'invention.
La figure 9 est une vue 3D d'un troisième exemple de coque acier d'un conteneur de TES selon l'invention.

Sur les figures, les mêmes références désignent des éléments identiques ou analogues.

### Description détaillée de l'invention

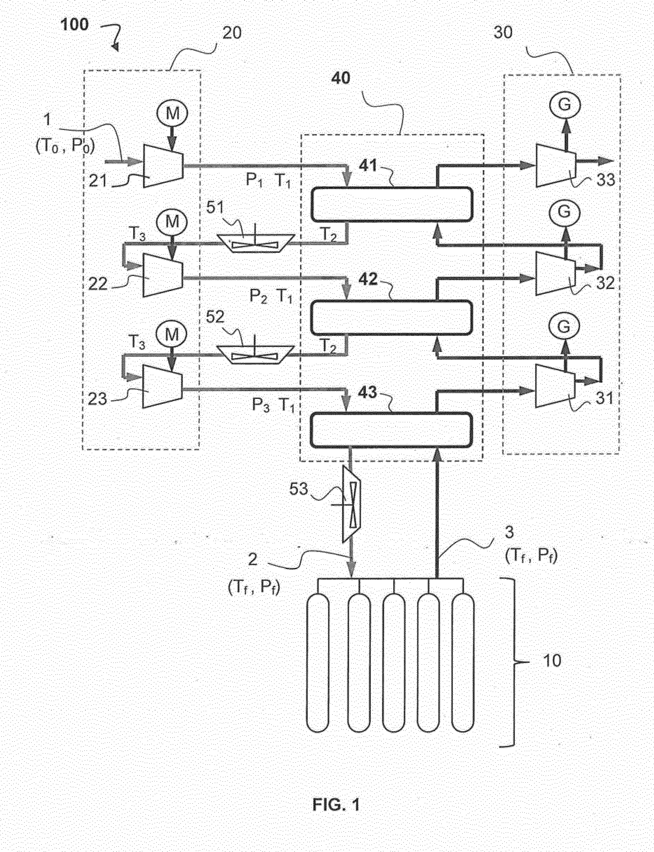

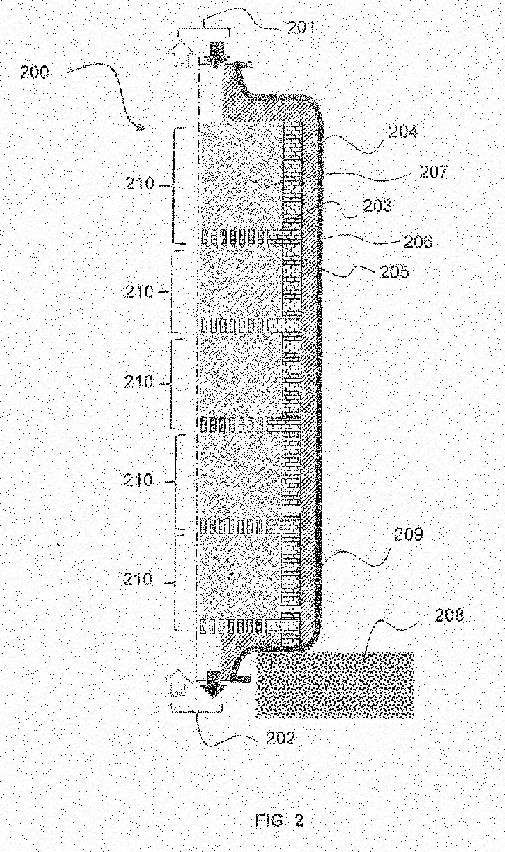

La figure 1 illustre schématiquement le principe de fonctionnement d'une installation AACAES comprenant un système de stockage et de restitution de la chaleur (TES) selon un mode de réalisation non limitatif de l'invention. Les particularités du conteneur du TES selon l'invention ne sont pas représentées sur cette figure, et sont décrites plus loin, notamment en relation avec les figures 2 à 9.

Sur la figure 1, l'installation AACAES 100 comporte un système de compression 20 de l'air, un système de détente 30 de l'air, un système de stockage et de restitution de la chaleur de l'air dénommé TES 40, et un réservoir final 10 pour stocker l'air comprimé.

Le TES selon l'invention est adapté à tout type de gaz, notamment l'air. Dans ce cas, l'air en entrée utilisé pour la compression peut être prélevé de l'air ambiant, et l'air en sortie après la détente peut être relâché dans l'air ambiant. Dans la suite de la description, seule la variante de réalisation avec de l'air comprimé sera décrite. Toutefois, tout autre gaz que l'air peut être mis en oeuvre dans le conteneur de TES selon l'invention.

Le train de compression 20 comporte trois étages de compression, chaque étage comprenant un compresseur (21, 22, 23). Le nombre d'étages de compression est fonction des technologies et des performances des compresseurs et comprend de préférence de un à six compresseurs. Le train de compression est nécessaire pour obtenir la pression désirée de l'air qui est stocké dans le réservoir 10. De préférence, la pression de l'air comprimé dans le réservoir final 10 est comprise entre 50 bars et 300 bars. Les compresseurs sont par entraînés par un moteur M, notamment un moteur électrique.

Le système de détente 30 de l'air comporte trois étages de turbines. Les trois turbines 31, 32, et 33 sont utilisées pour détendre l'air et générer la puissance électrique. Les turbines sont typiquement reliées à un générateur d'électricité G. Le nombre d'étages de détente est de préférence identique à celui du train de compression.

Typiquement, le nombre de turbines est égal au nombre de conteneurs de TES, et le nombre de compresseurs est égal ou supérieur au nombre de conteneurs de TES.

Un conteneur de TES par étage de compression est nécessaire. Ainsi le TES 40 comporte trois conteneurs (41, 42, 43). Chaque conteneur comprend une enceinte définissant un volume comportant au moins un lit fixe de particules d'un matériau de stockage de la chaleur, et est conçu pour résister à de hautes pressions et des températures modérées. Le matériau de stockage de la chaleur est apte à stocker les calories de l'air qui traverse le conteneur et qui est mis en contact avec ledit matériau, et de restituer cette chaleur à l'air qui traverse le conteneur à un autre moment. Ces conteneurs sont décrits en détails plus loin dans la description.

Lors de la phase de compression, dite aussi phase de stockage ou phase de charge, un air chaud, produit par la compression dans un compresseur (21, 22, 23), est admis dans un conteneur du TES (41, 42, 43) et ressort à faible température pour subir l'étage de compression suivant ou être stocké dans le réservoir final 10. Ainsi, l'air 1 entre à une température T₀ et une pression P₀ dans le compresseur 21, par exemple à 25°C (température ambiante) et à la pression atmosphérique. L'air est comprimé dans le compresseur 21, et chauffé du fait de la compression, et en ressort à une température T₁ et une pression P₁ plus élevées qu'initialement (T₀, P₀), par exemple à environ 260°C et environ 6 bars. L'air comprimé et chauffé entre alors dans le conteneur 41 et traverse le matériau de stockage de la chaleur avec lequel il échange des calories, pour en ressorti refroidi à une température T₂, par exemple à environ 100°C. Cet air refroidi peu t éventuellement être davantage refroidi dans un dispositif de ventilation 51 placé en sorti du conteneur de TES 41, pour atteindre une température T₃ inférieure à la température T₂, s'approchant de la température ambiante. La température T₃ est par exemple égale à environ 50°C. L'installation AACAES peut ainsi comprendre au moins un dispositif de refroidissement supplémentaire de l'air, différent des conteneurs de TES, par exemple de type ventilateur, pour abaisser la température de l'air en sorti de chaque conteneur de TES, et comprend de préférence autant de dispositifs de refroidissement supplémentaire, par exemple de type ventilateurs, que de conteneurs TES, chacun étant positionné sur la ligne d'air sortant de conteneur de TES et entrant dans le compresseur d'un étage de compression ou entrant dans le réservoir final 10. L'air éventuellement refroidi dans le ventilateur 51 est ensuite envoyé dans le compresseur 22, pour subir une nouvelle compression et augmentation de température l'accompagnant, et en ressort à une pression P₂ supérieure à la pression P₁, par exemple à une pression d'environ 30 bars, et à la température T₁. L'air à la température T₁ et pression P₂ est alors envoyé dans le conteneur de TES 42 où il est refroidi de la même manière que dans le conteneur 41. L'air ressort du conteneur 42 à la température T₂, est éventuellement refroidi davantage dans le ventilateur 52 jusqu'à la température T₃, avant d'être envoyé dans le dernier compresseur 23. L'air comprimé en sortie du compresseur 23 a une pression P₃ supérieure à la pression P₂, par exemple est à environ 125 bars, et est à la température T₁. Il est envoyé dans le conteneur de TES 43, puis éventuellement dans un ventilateur 53, pour enfin être envoyé (air 2) et stocké dans le réservoir de stockage d'air final 10, à une température de stockage T_{f}, qui est sensiblement égale à la température en sortie du dernier conteneur TES 43 ou éventuellement à la température T₃ en sortie du dernier ventilateur 53, par exemple égale à environ 50°C, et de préférence égal e à la température ambiante, et une pression de stockage P_{f}, qui est sensiblement égale à la pression P₃ en sortie du dernier compresseur 23 (modulo la perte de charge à l'issue du passage dans le conteneur de TES et éventuellement dans le ventilateur), par exemple environ 125 bars.

Lors de la phase de détente, dite aussi phase de déstockage ou phase de décharge, l'air froid, produit lors de la détente dans une turbine, est admis dans le conteneur du TES (41, 42, 43) pour lui transférer la chaleur stockée. Ainsi, l'air 3 sortant du réservoir 10 à la température de stockage T_{f} et la pression de stockage P_{f}, entre dans le conteneur de TES 43 où il est réchauffé au contact du matériau de stockage de la chaleur qui restitue la chaleur collectée lors de la phase de stockage. L'air réchauffé est ensuite envoyé dans la turbine 31 il subit une détente, et de ce fait également un refroidissement. En sorti de la turbine 31, l'air refroidi est envoyé dans le conteneur de TES 42 pour y être réchauffé, comme dans le conteneur 43, puis subit à nouveau une détente, et un refroidissement, par son passage dans la turbine 32. Avant son entrée dans le troisième étage de détente par la turbine 33, l'air sortant de la turbine 32 est envoyé dans le conteneur de TES 41 à fin de subir un dernier réchauffement.

Grâce au TES, la chaleur formée lors de la phase de compression de l'air est avantageusement stockée dans les conteneurs de TES et restituée lors de la phase de détente de l'air comprimé, assurant ainsi un rendement de l'installation optimal par la limitation de la perte de calories lors du procédé. Afin de maximiser le rendement et de garantir un système adiabatique, le conteneur de TES doit limiter au maximum le transfert de chaleur vers l'extérieur. Chaque conteneur du TES a de préférence un volume compris entre 200 m³ et 1000 m³, typiquement choisi selon l'énergie à stocker. Le conteneur de TES selon l'invention peut être utilisé quelle que soit la taille de l'installation AACAES. Le volume du conteneur et le nombre de conteneurs sont choisis en fonction de la taille du système AACAES visée. Le débit d'air entrant et sortant du conteneur de TES dépend de l'étage où se trouve le conteneur, en particulier dépend de la pression, et est préférentiellement compris entre 20 et 200 m³/h. La température du matériau de stockage est de préférence comprise entre la température ambiante, soit environ 25°C, et 300°C, et de préférence entre la température ambiante et 260°C.

Dans l'installation schématisée à la figure 1, le conteneur de TES 43, c'est-à-dire le conteneur de TES à partir duquel est envoyé l'air au réservoir final 10, est le dispositif de stockage de la chaleur qui impose le plus de contraintes pour le dimensionnement du TES. En effet, c'est celui qui supporte les plus fortes contraintes liées à la compression de l'air. Dans l'exemple donné et illustré à la figure 1, le conteneur de TES 43 présente les caractéristiques suivantes :
- il est apte à contenir un air ayant une température d'environ 260°C maximum ;
- il est apte à être opéré à une pression maximale de 125 bars ;
- il contient 336 m³ d'un matériau de stockage de la chaleur ;
- le matériau de stockage de la chaleur qu'il contient a une densité de 2400 kg/m³, ce qui amène par exemple à une densité apparente de 1200 kg/m³ en considérant un taux de vide de 50% ;
- le matériau de stockage qu'il contient est sous la forme de billes de 10 mm de diamètre.

Plusieurs unités de stockage de l'air comprimé sont représentées sur la figure 1 comme formant le réservoir de stockage d'air final 10, sans que cela constitue une limitation. Le réservoir de stockage de l'air comprimé 10 peut en effet être composé d'une ou plusieurs unités de stockage d'air, par exemple une ou plusieurs cuves, un système de tuyaux, ou une ou plusieurs cavités souterraines. Le volume total du réservoir 10 peut être compris entre 1000 m³ et 7000 m³, dans le cas d'installations AACAES de taille modeste, et peut aller jusqu'à environ 100 000 m³ selon les applications envisagées.

Le système AACAES comportant un conteneur de TES selon l'invention n'est pas limité à l'exemple de la figure 1. D'autres configurations peuvent être envisagées : un nombre différent d'étages de compression et/ou de détente, l'utilisation de moyens réversibles assurant la compression et la détente permettant de limiter le nombre de dispositifs utilisés dans le système et assurer ainsi un gain en poids et en volume du système, etc.

La figure 2 représente une coupe schématique longitudinale d'un conteneur de TES selon un mode de réalisation de l'invention. Seule la moitié du conteneur est représentée, l'autre partie étant symétrique.

Le conteneur 200 du TES est une enceinte, ayant typiquement une forme de colonne disposée sensiblement verticalement, par exemple sur un support 208 tel le sol, une dalle en béton ou tout support approprié au poids du conteneur, comportant, de préférence à son sommet et à sa base, des moyens d'injection et de soutirage 201/202 d'un gaz à refroidir ou à réchauffer, typiquement de l'air. Sur la figure, les flèches illustrent la circulation du gaz dans le conteneur de TES lors de deux phases distinctes de fonctionnement du conteneur, typiquement une phase de charge (phase compression du gaz avec stockage de la chaleur dans le TES) et une phase de décharge (détente du gaz avec restitution de la chaleur au gaz) dans un procédé AACAES. Le conteneur de TES n'est pas limité à une géométrie cylindrique de l'enceinte, mais peut également présenter une autre forme telle qu'une forme parallélépipédique. Un système de tuyauterie (non représenté) est prévu pour relier fluidiquement le conteneur aux autres dispositifs de l'installation AACAES (compresseurs, turbines, etc.), qui peut être en partie situé dans le sous-sol.

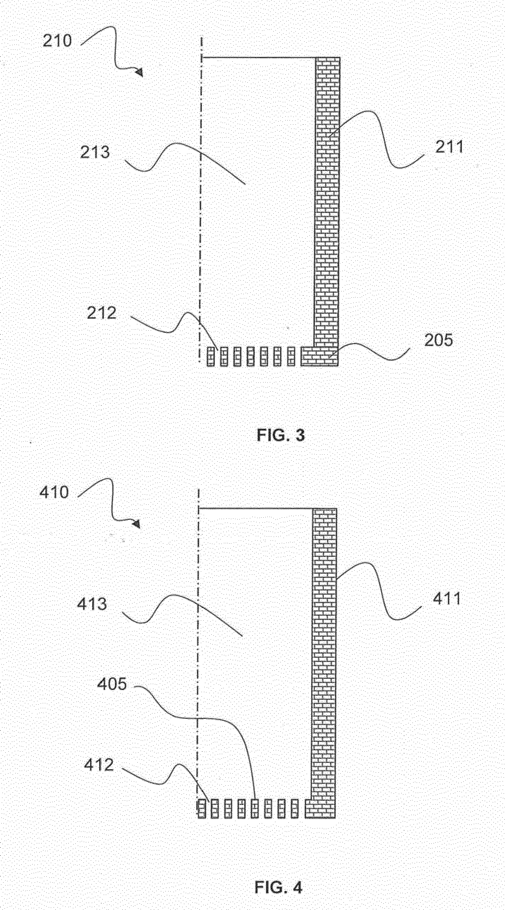

Le conteneur 200 comporte au moins deux modules en béton 210 disposés l'un au-dessus de l'autre, et de préférence une succession de plusieurs modules 210 disposés les uns au-dessus des autres tel que représenté à la figure 2. Par exemple, le conteneur selon l'invention comporte entre 2 et 12 modules en béton 210, de préférence entre 3 et 5 modules en béton 210. Les modules 210 sont positionnés de façon centrée. La figure 3 illustre schématiquement en coupe un tel module 210. Comme pour la figure 2, seule la moitié du module est représentée, l'autre moitié étant identique. Chaque module en béton 210 comporte une paroi latérale en béton 211 et un fond perforé en béton 205, la paroi et le fond délimitant un volume 213 apte à recevoir un matériau de stockage de la chaleur 207 sous forme de particules formant un lit fixe de particules (non représenté sur la figure 3). Le fond 205 du module 210 est typiquement une plaque en béton comportant des ouvertures 212 dont la taille est inférieure à celle des particules du matériau de stockage de la chaleur afin de retenir le matériau de stockage de la chaleur, tout en laissant passer le gaz dans le conteneur. Le fond 205 et la paroi 211 forment deux entités distinctes, formées par un matériau de même nature, i.e. un béton. La paroi 211 repose sur la plaque en béton 205. La partie de la plaque 205 supportant la paroi 211 est de préférence non perforée afin d'assurer une épaisseur en béton plein au moins égale à celle de la paroi 211 à la jonction paroi/fond du module. Alternativement, la paroi 211 comporte une gorge dans laquelle se loge la périphérie de la plaque en béton 205 constituant le fond du module (variante non représentée dans la figure 3). Dans ce cas, la partie de la plaque 205 s'insérant dans la gorge de la paroi 211 est de préférence non perforée afin d'assurer une épaisseur en béton plein au moins égale à celle de la paroi 211 à la jonction paroi/fond du module.

De préférence, les parois latérales des modules en béton ont une épaisseur comprise entre 50 mm et 500 mm. De préférence, le fond des modules en béton a une épaisseur comprise entre 100 et 300 mm.

Chaque module en béton 210 a de préférence une forme cylindrique, conduisant à un conteneur en forme de colonne. Cependant le module béton peut présenter une autre forme, par exemple parallélépipédique.

Le conteneur 200 comporte ainsi une pluralité de lits fixes (au moins deux) de particules de matériaux de stockage et de restitution de la chaleur 207, chaque lit étant disposé dans un module de béton 210. Par lit fixe de particules on entend un ensemble de particules agencées de manière aléatoire, qui n'est ni mobile ni fluidisé.

Les modules en béton 210 forment une première enveloppe en béton 203 du conteneur 200. Plus précisément cette enveloppe 203 est formée par l'ensemble des parois latérales 211 et des portions des fonds en béton 205 en contact avec les parois latérales 211. L'enveloppe en béton 203 est entourée par une couche isolante thermiquement 206, elle-même entourée par une coque en acier 204. L'enveloppe en béton 203 est en contact avec la couche isolante 206, elle-même en contact avec la coque en acier 204.

L'enveloppe en béton 203 a de préférence une épaisseur comprise en 50 mm et 500 mm, par exemple une épaisseur de 100 mm. L'enveloppe en béton 203 est apte à contenir le matériau de stockage qui peut être à une température allant jusqu'à 300°C, par exemple une température comprise entre la température ambiante (20°C) et 300°C, de préférence comprise entre 20°C et 260°C. L'enveloppe en béton 203 peut également supporter les contraintes exercées par le matériau de stockage de la chaleur, notamment les contraintes liées au poids du matériau de stockage pouvant représenter quelques centaines de tonnes. Le matériau de stockage et la première enveloppe en béton 203 sont contenus dans une coque en acier 204, séparée de la première enveloppe 203 par la couche isolante thermiquement 206. L'enveloppe en béton 203 et la couche isolante 206 ne sont pas étanches à la pression, c'est-à-dire qu'il n'y a pas de différence de pression de part et d'autre de l'enveloppe, et de la couche isolante. Ainsi, c'est la coque en acier qui reprend la pression interne du conteneur. Par pression interne du conteneur on entend la pression d'air en fonctionnement. De cette façon, la première enveloppe 203 est en équipression et la coque en acier n'est soumise qu'à l'effort dû à cette pression interne. Le conteneur 200 comporte de préférence au moins un trou d'équipression 209, qui est une ouverture dans l'enveloppe 203 formant un passage entre l'intérieur de l'enceinte et la couche isolante 206, permettant de transmettre la pression interne de l'enceinte vers la coque en acier 204. De préférence le conteneur 200 comporte plusieurs trous d'équipression 209, par exemple disposés dans les parois latérales de chaque module en béton 210.

La première enveloppe en béton 203 est principalement soumise à des efforts de compression sous des conditions de température modérée, typiquement allant jusqu'à environ 300°C. Les modules 210 peuvent être constitués de bétons ordinaires ou haute performances (BHP), qui peuvent être soumis à ce type de contraintes sans dégradation significative de leur performances mécaniques aux températures d'opération visées. Des bétons réfractaires et des bétons armés peuvent être également employés. La conductivité thermique de l'enveloppe en béton 203 est de préférence comprise entre 0,1 et 2 W.m⁻¹.K⁻¹.

La couche isolante 206 permet de limiter la température de fonctionnement de la coque en acier en limitant le transfert thermique. La couche isolante 206 permet également de faciliter le dimensionnement de la coque en acier en autorisant une contrainte faible concernant la température, en particulier un dimensionnement avec une température pouvant être inférieure ou égale à 50°C, voire proche de la température ambiante (20°C) au lieu d'un dimensionnement à température maximale de service qui est de 300°C. L'épaisseur de la couche isolante est de préférence telle que, en utilisation, la température de la coque en acier est inférieure ou égale à 50°C. La couche iso lante 206 n'est pas étanche à la pression. Cette perméabilité à la pression autorise un fonctionnement en équipression grâce à la transmission de la pression à la coque en acier 204. De préférence la couche isolante a une porosité telle qu'elle n'est pas étanche à la pression. La conductivité thermique de la couche isolante 206 est de préférence comprise entre 0,01 et 0,17 W.m⁻¹.K⁻¹. La couche isolante 206 a de préférence une épaisseur comprise en 50 mm et 400 mm, par exemple une épaisseur de 100 mm. L'épaisseur de la couche isolante 206 peut être réduite en choisissant un béton réfractaire pour former les modules en béton 210 (conductivité thermique réduite d'un béton réfractaire, typiquement divisée par deux par rapport à un béton armé ordinaire). L'épaisseur de la couche isolante dépend également de la nature du matériau choisi pour former cette couche. La couche isolante est de préférence une couche de laine de roche. D'autres matériaux peuvent également être utilisés pour former la couche isolante 206, tels que la perlite, la laine de verre, le verre cellulaire, une lame d'air.

La coque en acier 204, qui constitue l'enveloppe externe du conteneur 200, permet de résister à la pression interne du conteneur. Son épaisseur est dépendante de la sollicitation en pression. De préférence, l'épaisseur de la coque en acier ne dépasse pas 300 mm afin d'être compatible avec les moyens de fabrication connus à ce jour (forge, roulage et soudage). La conductivité thermique de la coque en acier 204 est de préférence comprise entre 20 et 250 W.m⁻¹.K⁻¹. Divers aciers peuvent être utilisés pour fabriquer la coque 204. Typiquement, la coque est en acier non-allié d'usage général, tel que l'acier P355GH.

Une telle structure en sandwich, formée par la succession, de l'intérieur vers l'extérieur du conteneur 200, de l'enveloppe en béton 203, de la couche isolante 206 et de la coque en acier 204, permet :
- de découpler les contraintes de reprise de poids du matériau de stockage et de pression interne. Une structure propre est dédiée à chaque sollicitation : le poids du matériau de stockage est supportée par la première enveloppe en béton 203 et la pression interne est supportée par la coque en acier 204 ;
- de réaliser un dimensionnement de la coque en acier à température ambiante grâce à la couche isolante, permettant ainsi de réduire l'épaisseur de la coque en acier, ce qui aboutit à un gain important sur la masse d'acier utilisée, et par conséquent une réduction des coûts, comparativement à un dimensionnement pour une température de l'ordre de 30°C, mais également ce qui permet d'obtenir des épaisseurs compatibles avec les moyens de production de la coque en acier. En effet, réaliser un conteneur de TES comportant une enceinte en acier ayant une température de fonctionnement très supérieure à 50°C, par exemple 260°C, pour les hautes pressions visées, représente un défi technologique, en particulier pour un diamètre de réservoir supérieur à 1 m. Typiquement, en prenant un acier tel que ceux couramment utilisés pour former les appareils à pression (ESP), par exemple un acier de type P355GH, l'épaisseur de la paroi acier atteint une épaisseur d'au minimum 150 mm. Ceci constitue une limite de fabrication qui complique la mise en forme de l'acier, l'assemblage par soudure mais aussi le transport, car la masse des réservoirs peut atteindre quelques centaines de tonnes ;
- de réaliser des réservoirs de plus gros diamètre, typiquement de l'ordre de 4 m.

Les modules 210 étant formés de pièces, i.e. parois et fonds, constituées d'un même matériau, i.e. du béton, on prévient ainsi les problèmes de dilatation thermique différentielle connus dans les dispositifs de l'art antérieur.

En outre, grâce à la nature du matériau composant les modules 210, les modules participent activement au stockage de la chaleur dans le conteneur de TES. Ainsi il est possible d'augmenter la capacité de stockage de la chaleur du conteneur de TES liée initialement au seul matériau de stockage de la chaleur sous forme de particules en lits fixes et/ou de réduire la masse de matériau de stockage au sein du conteneur pour une même capacité de stockage de la chaleur.

Le module en béton 210 a donc plusieurs fonctions, notamment celles de former l'enceinte du conteneur, de participer au stockage et à la restitution de la chaleur, de servir de support au matériau granulaire de stockage de la chaleur, et d'assurer une bonne répartition du matériau granulaire de stockage de la chaleur sur toute la hauteur du conteneur ce qui améliore les échanges thermiques entre le gaz et les particules du matériau de stockage avec le gaz et ce qui évite le tassement en fond du conteneur pouvant fragiliser la structure du conteneur.

Le matériau de stockage de la chaleur est sous forme de particules disposées de manière à former un lit fixe dans chaque module en béton 210. Le matériau de stockage de la chaleur est ainsi un matériau granulaire apte à stocker et à restituer de la chaleur, qui peut être, sans être limitatif, un béton, une céramique, de l'amiante, des graviers.

La forme et la taille des particules peuvent varier, et ces paramètres sont choisis de manière à garantir le passage de l'air à travers le lit, et à assurer un contact efficace entre le gaz et les particules afin d'optimiser les échanges de chaleur. De préférence, les particules sont sensiblement sphériques, et ont un diamètre moyen compris entre 1 et 20 mm

Selon un mode de réalisation de l'invention, les particules du matériau de stockage de la chaleur sont en béton. L'utilisation du même matériau pour les particules et pour les modules 210 permet de garantir une dilatation thermique sensiblement identique des particules et des modules accueillant les particules, évitant ainsi toute contrainte mécanique supplémentaire.

Les particules, typiquement des billes, du matériau de stockage de la chaleur sont de préférence dimensionnées de manière à prendre en compte la dilatation thermique des particules et celle des modules en béton lors du fonctionnement du conteneur, notamment afin d'éviter tout phénomène de blocage. Lorsque la température dans l'enceinte augmente, les modules se dilatent et par conséquent le matériau granulaire de stockage de la chaleur peut combler l'augmentation de volume. Lorsqu'une phase de refroidissement survient, les modules réduisent de diamètre et peuvent comprimer le matériau granulaire et générer ainsi des sur contraintes néfastes pour la structure.

Par exemple, le matériau de stockage de la chaleur est en béton et sous forme de billes d'un diamètre supérieur ou égal à 10 mm.

Selon un autre mode de réalisation, le module en béton est monobloc, tel qu'illustré à la figure 4. Le module en béton 410 est formé d'une seule pièce en béton. Il comporte une paroi latérale 411 se prolongeant par un fond 405 perforé dont les ouvertures 412 permettent le passage du gaz dans le conteneur. Le volume 413 défini par la paroi latérale 411 et le fond perforé 405, est apte à recevoir, comme décrit pour le module en béton 210 de la figure 3, un lit fixe de particules du matériau de stockage de la chaleur. Comme pour le module en béton 210, les problèmes de dilatations différentielles sont réduits du fait de la même nature de matériau pour le fond et la paroi du module, et le module en tant que tel participe au stockage et à la restitution de la chaleur du gaz traversant le conteneur.

Cette configuration est en outre particulièrement avantageuse pour la fabrication du conteneur de TES. En effet, les modules entiers peuvent être préfabriqués et ainsi faciliter le montage du conteneur par empilement des modules d'une seule pièce. Les modules peuvent également être pré-remplis avec le matériau de stockage de la chaleur avant leur assemblage pour former le conteneur.

Le conteneur 200 selon l'invention permet de stocker la chaleur provenant d'un gaz chaud, le stockage étant réalisé par les particules de matériau de stockage de la chaleur 207. Le conteneur permet également de restituer la chaleur stockée dans les particules à un gaz froid. Le gaz entre ou sort dans le conteneur 200 par ses extrémités, au niveau des moyens d'injection et de soutirage 201/202, et échange de la chaleur avec les particules du matériau de stockage et de restitution de la chaleur 207 qui sont disposées sous forme de lits permettant le passage du gaz à travers ceux-ci. Le passage du fluide dans le lit fixe de particules est sensiblement axial, c'est-à-dire que le fluide circule de manière globale selon l'axe principal défini entre les points d'entrée et de sortie du gaz dans le conteneur 200, typiquement situés à deux extrémités opposées du conteneur 200. Typiquement le passage du gaz se fait sensiblement selon la verticale. Selon cette configuration, lors de la charge, le fluide entre chaud, à une température T₁, par le haut du conteneur, et sort froid (refroidi par les particules qui stockent une partie de la chaleur du gaz), à une température T₂ (T₂<T₁), par le fond du conteneur. Pour la décharge, le gaz entre froid, à une température T₂, par le fond du conteneur, et sort chaud (chauffé par les particules qui restituent une partie de la chaleur des particules), à une température T₁ par le haut du conteneur. La configuration décrite constitue une configuration préférée dans laquelle le conteneur comprend une zone chaude dans sa partie supérieure, due à l'entrée du gaz chaud lors de la phase de charge et à la sortie du gaz réchauffé lors de la décharge, et une zone froide dans la partie inférieure due à la sortie du gaz refroidi lors de la phase de charge et l'entrée du gaz froid lors de la phase de décharge. Une zone chaude dans la partie supérieure permet notamment de minimiser le mouvements d'air lors d'une phase d'attente avant la phase de décharge. Cependant, le conteneur peut être utilisé selon une configuration inversée dans laquelle la zone chaude se situe dans sa partie inférieure et la zone froide dans la partie supérieure. Dans ce cas, lors de la phase de charge, le gaz chaud à refroidir arrive à une température T₁, par le bas du conteneur et sort froid, à une température T₂ (T₂<T₁), par le haut du conteneur, et lors de la décharge, le gaz entre froid, à une température T₂, par le haut du conteneur, et sort chaud à une température T₁, par le bas du conteneur.

Avantageusement, le conteneur de TES selon l'invention est apte à fonctionner à des pressions comprises entre 1 bar et 300 bars, en particulier entre 100 bar et 300 bars, et plus particulièrement entre 100 et 150 bars, et à des températures comprises entre la température ambiante, généralement de 20°C, et 300° C, de préférence entre la température ambiante et 260°C.

Selon un mode de réalisation, le conteneur de TES ne forme pas un seul réservoir mais comprend plusieurs enceintes définies chacune comme précédemment décrit pour l'enceinte du conteneur de TES illustré à la figure 2, c'est-à-dire comportant, de préférence à son sommet et à sa base, des moyens d'injection et de soutirage du gaz, chaque enceinte étant délimitée par une première enveloppe en béton entourée par une couche isolante thermiquement, elle-même étant entourée d'une coque en acier. Chaque enceinte comporte au moins deux modules en béton disposés l'un au-dessus de l'autre de manière centrée pour former la première enveloppe en béton. Chaque module en béton comprend un volume délimité par une paroi latérale en béton et un fond perforé en béton, le volume contenant un lit fixe de particules d'un matériau de stockage et de restitution de chaleur. Les différentes enceintes communiquent fluidiquement et sont montées en série et/ou en parallèle pour former un conteneur de TES composé d'éléments de taille et de poids réduits. Le montage en série et/ou parallèle s'entend relativement au gaz envoyé dans les enceintes du conteneur de TES : dans un montage en série, le gaz traverse successivement les différentes enceintes du conteneur de TES, alors que dans un montage en parallèle, le flux de gaz à refroidir/chauffer est divisé entre plusieurs sous flux injecté chacun dans une enceinte du conteneur de TES.

Le conteneur de TES selon l'invention est de préférence utilisé dans un système AACAES tel que décrit en relation avec la figure 1. Cependant, l'usage du conteneur de TES selon l'invention n'est pas limité au stockage d'énergie par air comprimé de type AACAES. Le conteneur de TES selon l'invention peut également être utilisé dans d'autres applications où un stockage et une restitution de la chaleur d'un gaz sont requises, dans des conditions de pressions élevées, par exemple pour une utilisation dans des réseaux de chaleur, ou dans les centrales solaires thermiques à concentration. Ces différentes applications nécessitent des moyens de stockage de l'énergie si cette dernière n'est pas consommée lors de sa production. Par conséquent, l'énergie disponible sous forme de flux de chaleur peut être stockée dans un système de stockage et de restitution de la chaleur (TES) selon l'invention comportant au moins un conteneur tel que décrit.

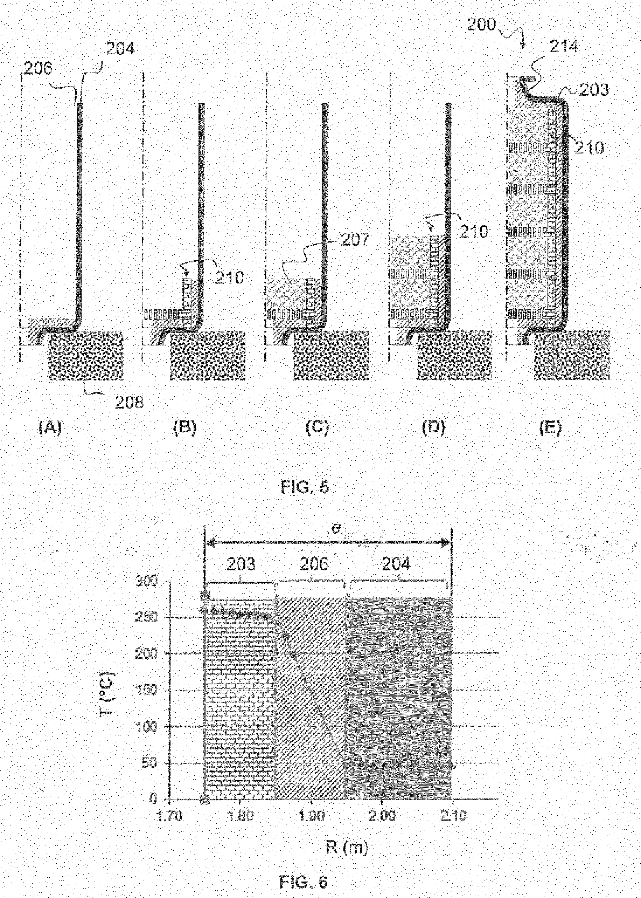

La figure 5 illustre un exemple non limitatif de montage du conteneur de TES selon l'invention. Les schémas (A) à (E) illustrent la succession des étapes du montage du conteneur de TES selon l'invention. Selon cet exemple de montage, on réalise les étapes ci-dessous.

Une première étape (schéma (A)) d'installation sur site de la coque en acier 204 dépourvue de son chapeau de couverture 214, et de la couche isolante 206, est réalisée. La coque en acier peut également être désignée sous le terme de virole. La coque en acier 204 est déposée sur un support 208, e.g. le sol.

Avantageusement, la coque en acier est préfabriquée, c'est-à-dire que la chaudronnerie de la coque est réalisée en atelier, et est acheminée en un seul bloc sur le lieu du montage. Dans ce cas, seul la soudure ou l'assemblage du couvercle 214 est réalisé sur le site du montage après avoir inséré les modules en béton 210 et le matériau de stockage de la chaleur dans la coque en acier, et placé l'isolant entre les modules en béton et la coque en acier.

Alternativement, la coque en acier 204 est partitionnée en plusieurs éléments qui sont acheminés sur le site du montage et assemblés par soudage sur site.

Une deuxième étape (schémas (B) à (C)) de montage des modules en béton, de mise en place de la couche isolante 406, et de remplissage des modules par le matériau de stockage de la chaleur 207 est réalisée

Une fois installée la coque en acier 204, chaque étage du conteneur comportant un module est de préférence monté comme suit, dans cet ordre :
- mise en place du module béton ;
- installation de l'isolant entre la paroi en béton externe 211 et la coque acier 404. L'isolant peut être typiquement de la laine de roche en vrac ou en rouleau ;
- remplissage du module béton avec le matériau de stockage 207 choisi.

Le premier module en béton 210 inséré au sein de la coque en acier par le sommet ouvert de la coque 204, vient reposer sur le fond de la coque préalablement isolé thermiquement. Lors du montage des modules successifs, on s'assure du centrage des modules les uns par rapport aux autres lors de leur empilement, afin de créer une paroi continue de la première enveloppe en béton 203.

Selon une alternative, les modules en béton 410 peuvent être remplis avec le matériau de stockage de la chaleur 207 avant l'installation de l'isolant 206 entre la paroi en béton externe 418 et la coque acier 404.

Selon une alternative, les modules en béton 210 peuvent être remplis par le matériau de stockage de la chaleur 207 avant leur insertion dans la coque en acier 204.

On réalise une troisième étape de fermeture du conteneur 200 par assemblage de la coque 204 avec son couvercle en acier 214 préalablement isolé thermiquement, de préférence par soudage du couvercle 214 avec la paroi en acier de la coque 204.

La mise en place d'autres dispositifs, tels que les moyens d'injection et de soutirage du gaz n'est pas détaillée, celle-ci étant aisément conçue par l'homme du métier.

Sur la figure 5, les trous d'équipression ne sont pas représentés. Ceux-ci sont de préférence réalisés dans les modules en béton avant leur mise en place dans la coque en acier.

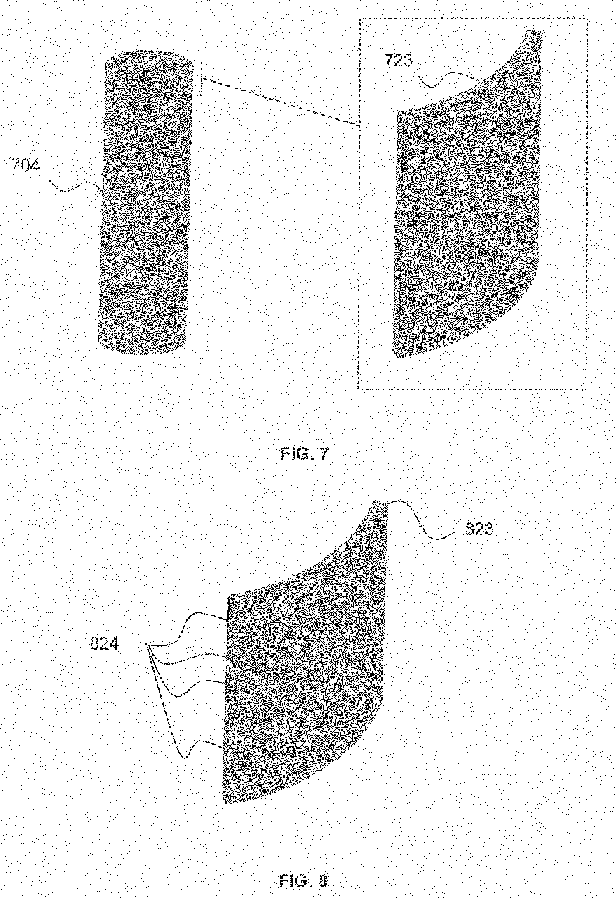

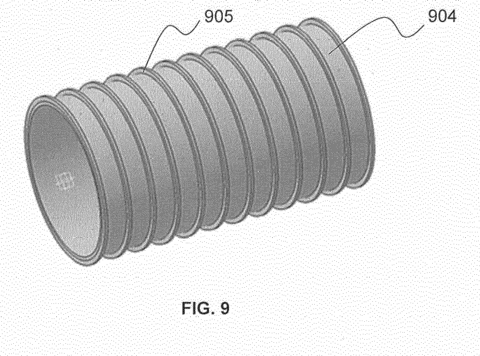

La fabrication de la coque en acier 204 peut être réalisée selon différentes techniques :
- la coque en acier peut être assemblée par soudage de tôles cintrées d'une seule épaisseur. La figure 7 illustre une telle coque 704, composée par des tôles d'une seule épaisseur 723 soudées. Des tôles initialement plates sont cintrées pour obtenir le rayon de l'enceinte, et sont ensuite assemblées par soudure pour former la coque en acier 704 qui a une paroi monocouche.
- la coque en acier peut également être assemblée par soudage de tôles cintrées en multicouches afin de travailler avec des épaisseurs de tôle unitaire plus faibles que l'épaisseur d'une tôle utilisée pour former une coque monocouche. Une partie d'une telle coque est illustrée à la figure 8 où l'on peut voir plusieurs couches 824 de tôles qui sont superposées pour former la paroi 823 de la coque acier. Cette technique permet de faciliter le travail de mise en forme de la tôle. Selon cette technique de fabrication, on peut assembler les couches supérieures avec une prétention afin de réaliser une coques multicouches avec frettage sur les couches extérieures. La mise en compression des couches inférieures leur permet de supporter des contraintes plus importantes ou de supporter un contrainte similaire tout en étant de plus faibles épaisseurs, ce qui a pour avantage d'optimiser la quantité d'acier nécessaire à la construction.
- la coque en acier peut aussi être fabriquée à partir de l'assemblage, de préférence par soudage, de tôles cintrées d'une seule épaisseur, telle que la coque monocouche illustrée à la figure 7, qui sont renforcées par des anneaux circonférentiels. Cette technique permet d'obtenir une coque à paroi de faible épaisseur et résistante à de fortes sollicitations de pression. La figure 9 est un dessin en 3D illustrant une telle coque en acier raidie 904 par la présence d'anneaux circonférentiels 905. La coque en acier a une forme cylindrique, et comporte une pluralité d'anneaux circonférentiels 905 de renfort (au nombre de 12 dans la figure 9). Les anneaux circonférentiels 905 sont de préférence réalisés en métal, en particulier en acier.

### Exemple

Un exemple chiffré d'un conteneur de TES selon l'invention, utilisé dans un système AACAES tel que représenté à la figure 1 en tant que dernier conteneur 43 avant passage du gaz dans le réservoir final 10 (ou premier conteneur quand le gaz sort du réservoir 10), est donné ci-dessous.

Un conteneur de TES selon l'invention comprend par exemple une enceinte formée par une enveloppe en béton 203 ayant un diamètre interne de 3,5 m et une épaisseur de 100 mm, pouvant supporter une pression interne de 125 bars et une température élevée de l'ordre de 260°C. Une couche isolante en laine de roche d'une épaisseur de 100 mm est placée entre l'enveloppe en béton 203 et la coque en acier 204, permettant de limiter la température de la paroi en acier à 50°C. La coque en acier a un diamètre interne de 3,9 m, et est épaisse de 146 mm. Un tel conteneur de TES développe un volume interne de 672 m³, permettant de contenir 806 tonnes d'un matériau de stockage ayant par exemple une densité de 1200 kg/m³. Cinq étages formés par l'empilement de cinq modules en béton 210, de 14 m de haut chacun, peuvent être prévus pour former le conteneur d'une hauteur totale de l'ordre de 70 m (cette hauteur ne tient pas compte des dimensions des dispositifs à la base et au sommet du conteneur). Dans cet exemple, les différentes couches présentent les conductivités thermiques suivantes : 0.,92 W.m⁻¹.K⁻¹ pour l'enveloppe en béton, 26 W.m⁻¹.K⁻¹ pour la paroi de la coque en acier, et 0,04 W.m⁻¹.K⁻¹ pour la couche isolante.

La figure 6 illustre l'évolution de la température (température en ordonnée en °C) au sein de la paroi multicouches (rayon du conteneur en abscisse en mètres) de cet exemple de conteneur de TES selon l'invention, la paroi étant formée par l'enveloppe en béton 203, la couche isolante 206 et la coque en acier 204. L'épaisseur totale e de la paroi du conteneur de TES est de 346 mm, avec respectivement une épaisseur de la première enveloppe en béton 203 de 100 mm, une épaisseur de la couche isolante 206 de 100 mm, et une épaisseur de la coque en acier 204 de 146 mm. On voit qu'avec une température de 260°C dans l'enceinte du conteneur, on passe à une température inférieure à 50 °C dans la coque en acier 204.

Pour la fabrication d'un tel conteneur de TES, 190 tonnes de béton et 1000 tonnes d'acier sont nécessaires.

## Revendications

1. Conteneur (200) d'un système de stockage et de restitution de la chaleur (40), comprenant une enceinte comportant des moyens d'injection et de soutirage (201/202) d'un gaz à refroidir ou réchauffer, ladite enceinte étant délimitée par une première enveloppe en béton (203) entourée par une couche isolante thermiquement (206), ladite couche isolante (206) étant entourée d'une coque en acier (204), ladite première enveloppe en béton (203) et ladite couche isolante (206) étant non étanches à la pression, et **caractérisé en ce que** ladite enceinte comporte au moins deux modules en béton (210, 410) disposés l'un au-dessus de l'autre de manière centrée pour former la première enveloppe en béton (203),
chaque module en béton (210, 410) comprenant un volume délimité par une paroi latérale en béton (211) et un fond perforé en béton (205), ledit volume étant apte à contenir un lit fixe de particules d'un matériau de stockage et de restitution de chaleur (207).

2. Conteneur selon la revendication 1, dans lequel les modules en béton (410) sont monoblocs.

3. Conteneur selon l'une des revendications précédentes, dans lequel le matériau de stockage et de restitution de la chaleur (207) est sous forme de particules en béton.

4. Conteneur selon l'une des revendications précédentes en forme de colonne, comportant des modules en béton (210, 410) de forme cylindrique.

5. Conteneur selon l'une des revendications précédentes, comportant des trous d'équipression dans l'enveloppe en béton (203).

6. Conteneur selon l'une des revendications précédentes, dans lequel la conductivité thermique est comprise entre :
- 0,1 et 2 W.m⁻¹.K⁻¹ pour l'enveloppe en béton (203),
- 0,01 et 0,17 W.m⁻¹.K⁻¹ pour la couche isolante (206), et
- 20 et 250 W.m⁻¹.K⁻¹ pour la coque en acier (204).

7. Conteneur selon l'une des revendications précédentes, dans lequel l'épaisseur de la couche isolante est telle que, en utilisation, la température de la coque en acier (204) est inférieure ou égale à 50°C, et dans lequel la c ouche isolante (206) est de préférence choisie parmi une couche de laine de roche, de perlite, de la laine de verre, de verre cellulaire, une lame d'air, et plus préférentiellement est une couche de laine de roche.

8. Conteneur selon l'une des revendications précédentes, comportant entre 2 et 12 modules en béton (210, 410).

9. Conteneur selon l'une des revendications précédentes, dans lequel l'enceinte a un volume compris entre 200 m³ et 1000 m³.

10. Conteneur selon l'une des revendications précédentes, comprenant plusieurs enceintes montées en série et/ou en parallèle.

11. Système de stockage et de restitution de la chaleur (40) comportant au moins un conteneur (200) selon l'une des revendications 1 à 10.

12. Installation de stockage d'énergie par air comprimé de type AACAES (100), comportant :
- un système de compression (20) pour comprimer de l'air lors d'une phase de compression ;
- un système de stockage et de restitution de la chaleur (40) selon la revendication 11 pour stocker la chaleur de l'air comprimé lors de la phase de compression et pour restituer ladite chaleur à l'air comprimé lors d'une phase de détente ;
- un réservoir final (10) de stockage de l'air comprimé par le système de compression et refroidi par le système de stockage et de restitution de la chaleur (10) ;
- un dispositif de détente de l'air comprimé issu du réservoir de stockage final (30) lors de la phase de détente.

13. Installation selon la revendication 12, dans laquelle le réservoir final (10) a un volume compris entre 1000 m³ et 7000 m³ et l'enceinte dudit au moins un conteneur (200) du système de stockage et de restitution de la chaleur (40) a un volume compris entre 200 m³ et 1000 m³, ledit système de stockage et de restitution de la chaleur (40) comprenant de préférence au moins trois conteneurs (200).

14. Procédé de montage d'un conteneur selon l'une des revendications 1 à 10, comportant :
- l'installation de la coque en acier (204) dépourvue d'un chapeau de couverture (214) sur le site de montage du conteneur, ladite coque en acier (204) étant disposée sur un support (208) ;
- le montage des modules en béton (210), l'installation de la couche isolante et le remplissage desdits modules (210) par le matériau de stockage de la chaleur (207), par insertion successive desdits modules dans la coque en acier (204) de manière centrée pour former la première enveloppe en béton (203) ;
- la fermeture du conteneur (200) par assemblage de la coque en acier (204) avec un couvercle en acier (214) préalablement isolé thermiquement, de préférence par soudage.

15. Procédé de montage selon la revendication 14, dans lequel on remplit le volume du module en béton (210) par le matériau de stockage de la chaleur (207) de manière à créer un lit fixe de particules une fois ledit module (210) inséré dans la coque en acier (204).

16. Procédé de montage selon la revendication 14, dans lequel on remplit le volume du module en béton (210) par le matériau de stockage de la chaleur (207) de manière à créer un lit fixe de particules avant l'insertion dudit module (210) dans la coque en acier (204).

## Patentansprüche

1. Behälter (200) eines Wärmespeicher- und -abgabesystems (40), umfassend einen Raum, umfassend Mittel zum Injizieren und Entnehmen (201/202) eines zu kühlenden oder wieder zu erhitzenden Gases, wobei der Raum von einer ersten Betonhülle (203) begrenzt ist, die von einer Wärmeisolierschicht (206) umgeben ist, wobei die Isolierschicht (206) von einer Schale aus Stahl (204) umgeben ist, wobei die erste Betonhülle (203) und die Isolierschicht (206) nicht dicht gegen Druck sind, **dadurch gekennzeichnet, dass** der Raum mindestens zwei Betonmodule (210, 410) umfasst, die übereinander zentriert angeordnet sind, um die erste Betonhülle (203) zu bilden, wobei jedes Betonmodul (210, 410) ein Volumen umfasst, das von einer seitlichen Betonwand (211) und einem perforierten Betonboden (205) begrenzt ist, wobei das Volumen geeignet ist, ein Partikelfestbett eines Wärmespeicher- und - abgabematerials (207) zu enthalten.

2. Behälter nach Anspruch 1, bei dem die Betonmodule (410) einstückig sind.

3. Behälter nach einem der vorhergehenden Ansprüche, bei dem das Wärmespeicher- und -abgabematerial (207) in Form von Betonpartikeln vorhanden ist.

4. Behälter nach einem der vorhergehenden Ansprüche in Säulenform, umfassend Betonmodule (210, 410) von zylindrischer Form.

5. Behälter nach einem der vorhergehenden Ansprüche, umfassend Gleichdrucklöcher in der Betonhülle (203).

6. Behälter nach einem der vorhergehenden Ansprüche, bei dem die Wärmeleitfähigkeit beträgt zwischen:
- 0,1 und 2 W.m⁻¹.K⁻¹ für die Betonhülle (203),
- 0,01 und 0,17 W.m⁻¹.K⁻¹ für die Isolierschicht (206), und
- 20 und 250 W.m⁻¹.K⁻¹ für die Stahlschale (204).

7. Behälter nach einem der vorhergehenden Ansprüche, bei dem die Dicke der Isolierschicht derart ist, dass bei Verwendung die Temperatur der Stahlschale (204) kleiner oder gleich 50 °C ist, und bei dem die Isolierschicht (206) vorzugsweise unter einer Schicht aus Steinwolle, Perlit, Glaswolle, Zellwolle, einer Luftspalte ausgewählt ist und bevorzugt eine Schicht aus Steinwolle ist.

8. Behälter nach einem der vorhergehenden Ansprüche, umfassend zwischen 2 und 12 Betonmodule (210, 410).

9. Behälter nach einem der vorhergehenden Ansprüche, bei dem der Raum ein Volumen zwischen 200 m³ und 1000 m³ hat.

10. Behälter nach einem der vorhergehenden Ansprüche, umfassend mehrere Räume, die in Serie und/oder parallel montiert sind.

11. Wärmespeicher- und -abgabesystem (40), umfassend mindestens einen Behälter (200) nach einem der Ansprüche 1 bis 10.

12. Energiespeicheranlage durch komprimierte Luft vom Typ AACAES (100), umfassend:
- ein Kompressionssystem (20), um Luft in einer Kompressionsphase zu komprimieren,
- ein Wärmespeicher- und -abgabesystem (40) nach Anspruch 11, um die Wärme der in der Kompressionsphase komprimierten Luft zu speichern, und um die Wärme an die komprimierte Luft in einer Entspannungsphase abzugeben;
- einen Endbehälter (10) zur Speicherung der durch das Kompressionssystem komprimierten und durch das Wärmespeicher- und -abgabesystem (10) gekühlten Luft;
- eine Vorrichtung zur Entspannung der aus dem Endspeicherbehälter (30) kommenden komprimierten Luft in der Entspannungsphase.

13. Anlage nach Anspruch 12, bei der der Endbehälter (10) ein Volumen zwischen 1000 m³ und 7000 m³ hat, und der Raum des mindestens einen Behälters (200) des Wärmespeicher- und -abgabesystems (40) ein Volumen zwischen 200 m³ und 1000 m³ hat, wobei das Wärmespeicher- und -abgabeyystem (40) vorzugsweise mindestens drei Behälter (200) umfasst.

14. Verfahren zur Montage eines Behälters nach einem der Ansprüche 1 bis 10, umfassend:
- die Installation der Stahlschale (204) ohne Abdeckkappe (214) an dem Montagestandort des Behälters, wobei die Stahlschale (204) auf einem Träger (208) angeordnet ist;
- die Montage der Betonmodule (210), die Installation der Isolierschicht und das Füllen der Module (210) mit dem Wärmespeichermaterial (207) durch aufeinanderfolgendes zentriertes Einsetzen der Module in die Stahlschale (204), um die erste Betonhülle (203) zu bilden;
- das Verschließen des Behälters (200) durch Zusammenfügen der Stahlschale (204) mit einem Deckel aus Stahl (214), der vorher wärmeisoliert wurde, vorzugsweise durch Schweißen.

15. Montageverfahren nach Anspruch 14, bei dem das Volumen des Betonmoduls (210) mit dem Wärmespeichermaterial (207) gefüllt wird, um ein Partikelfestbett zu erzeugen, wenn das Modul (210) in die Stahlschale (204) eingesetzt ist.

16. Montageverfahren nach Anspruch 14, bei dem das Volumen des Betonmoduls (210) mit dem Wärmespeichermaterial (207) gefüllt wird, um ein Partikelfestbett vor dem Einsetzen des Moduls (210) in die Stahlschale (204) zu erzeugen.

## Claims

1. A container (200) of a heat storage and release system (40), comprising an enclosure including means (201/202) for injecting and withdrawing a gas to be cooled or heated, said enclosure being delimited by a first concrete casing (203) surrounded by a thermally insulating layer (206), said insulating layer (206) being surrounded by a steel shell (204), said first concrete casing (203) and said insulating layer (206) being non-pressure-tight, and **characterized in that** said enclosure comprises at least two concrete modules (210, 410) arranged one above the other in a centered manner so as to form first concrete casing (203), each concrete module (210, 410) comprising a volume delimited by a concrete lateral wall (211) and a perforated concrete bottom (205), said volume being suited to contain a fixed bed of particles of a heat storage and release material (207).

2. A container as claimed in claim 1, wherein concrete modules (410) are monobloc modules.

3. A container as claimed in any one of the previous claims, wherein heat storage and release material (207) comes in form of concrete particles.

4. A column-shaped container as claimed in any one of the previous claims, comprising concrete modules (210, 410) of cylindrical shape.

5. A container as claimed in any one of the previous claims, comprising equipressure holes in concrete casing (203).

6. A container as claimed in any one of the previous claims, wherein the thermal conductivity ranges between:
- 0.1 and 2 W.m⁻¹.K⁻¹ for concrete casing (203),
- 0.01 and 0.17 W.m⁻¹.K⁻¹ for insulating layer (206), and
- 20 and 250 W.m⁻¹.K⁻¹ for steel shell (204).

7. A container as claimed in any one of the previous claims, wherein the thickness of the insulating layer is such that, in use, the temperature of steel shell (204) is less than or equal to 50°C, and wherein insulating layer (206) is preferably selected from among a layer of rock wool, perlite, glass wool, cellular glass, an air gap, and it is more preferably a rock wool layer.

8. A container as claimed in any one of the previous claims, comprising between 2 and 12 concrete modules (210, 410).

9. A container as claimed in any one of the previous claims, wherein the enclosure has a volume of between 200 m³ and 1000 m³.

10. A container as claimed in any one of the previous claims, comprising several enclosures arranged in series and/or in parallel.

11. A heat storage and release system (40) comprising at least one container (200) as claimed in any one of claims 1 to 10.

12. An AACAES type compressed air energy storage facility (100), comprising:
- a compression system (20) for compressing air during a compression phase,
- a heat storage and release system (40) as claimed in claim 11 for storing the heat of the air compressed during the compression phase and for releasing said heat to the compressed air during an expansion phase,
- a final tank (10) for storing the air compressed by the compression system and cooled by heat storage and release system (40),
- a device (30) for expanding the compressed air from the final storage tank during the expansion phase.

13. A facility as claimed in claim 12, wherein final tank (10) has a volume ranging between 1000 m³ and 7000 m³, and the enclosure of said at least one container (200) of heat storage and release system (40) has a volume ranging between 200 m³ and 1000 m³, said heat storage and release system (40) preferably comprising at least three containers (200).

14. A method for mounting a container as claimed in any one of claims 1 to 10, comprising:
- installing steel shell (204) without a cover cap (214) on the container mounting site, said steel shell (204) being arranged on a support (208),
- mounting concrete modules (210), installing the insulating layer and filling said modules (210) with heat storage material (207), by successively inserting said modules into steel shell (204) in a centered manner so as to form first concrete casing (203),
- closing container (200) by assembling steel shell (204) with a steel cap (214) previously thermally insulated, preferably by welding.

15. A mounting method as clamed in claim 14, wherein the volume of concrete module (210) is filled with heat storage material (207) so as to create a fixed particle bed once said module (210) inserted in steel shell (204).

16. A mounting method as claimed in claim 14, wherein the volume of concrete module (210) is filled with heat storage material (207) so as to create a fixed particle bed prior to inserting said module (210) into steel shell (204).
